Europäisches Patentamt

(19) European Patent Office

Office européen des brevets

(11) EP 0 730 952 A2

(12) **EUROPEAN PATENT APPLICATION**

(43) Date of publication:
11.09.1996 Bulletin 1996/37

(51) Int. Cl.$^6$: **B32B 31/12**, B32B 15/08

(21) Application number: 96103561.5

(22) Date of filing: 07.03.1996

(84) Designated Contracting States:
BE DE FR GB NL

(30) Priority: 07.03.1995 JP 46690/95
26.07.1995 JP 189989/95
19.09.1995 JP 239589/95

(71) Applicant: NIPPON STEEL CORPORATION
Tokyo (JP)

(72) Inventors:
• Nakano, Hirofumi,
c/o Nippon Steel Corporation
Futtsu City, Chiba (JP)

• Ohga, Tomonari,
c/o Nippon Steel Corporation
Futtsu City, Chiba (JP)
• Hayashi, Tomohiko,
c/o Nippon Steel Corporation
Futtsu City, Chiba (JP)
• Ooyagi, Yashichi,
c/o Nippon Steel Corporation
Kitakyushu City, Fukuoka (JP)

(74) Representative: VOSSIUS & PARTNER
Siebertstrasse 4
81675 München (DE)

(54) **Method of laminating resin film to metal strip, laminate metal strip manufactured by the method, and can formed by the metal strip**

(57) A laminate metal strip is formed by using a gas having a transmission coefficient ratio to air of at least 2 times in an atmosphere sealing box where a resin film is laminated to a metal strip, such as a carbon dioxide gas, a helium gas or an oxygen gas, and by controlling the gas so that the volume ratio thereof to the total valume of an atmosphere gas in the atmosphere sealing box is at least 80%. The gas entrapped is dissipated to an atmosphere after the formation of the metal strip and becomes harmless at the time of subsequent processing.

Fig.1

## Description

This invention relates to a method of producing a laminate material used for container materials, home electric appliances, building materials, etc., a laminate metal strip produced by this method, and a can.

Coated sheets produced by applying a coating to a plated steel sheet or an aluminum sheet have been mainly employed in the fields of container materials, home electric appliances and building materials. However, legal restrictions on environmental contamination resulting from solvents have tended to become more severe, and improvements in the efficiency of the coating and baking processes and in saving of energy have inherent limits. Therefore, methods which laminate a resin film onto a flat sheet and use the resulting laminate sheet for post processing will become increasingly common as methods which do not use solvents for coating.

Film and metallic foil laminate materials or multi-layered laminate materials have been technically developed and have been widely used to date as packaging materials, and have also been applied in the field of food cans. Further, laminate metal sheets have been practically applied in the field of building materials.

Japanese Examined Patent Publication (Kokoku) No. 61-3676 discloses a lamination method which bonds an organic resin film to a steel strip.

This method pre-heats a tin plated steel strip, provisionally bonds a resin film to the steel strip by press rolls, then raises the temperature of the steel strip and finally bonds the resin film by press rolls. A process technology for producing a laminate metal strip at a laminate speed several times higher than a usual coating speed is essential in order to provide an economical and stable material. However, when a resin film is supplied at a high speed to the surface of a steel strip, air present in the proximity of the surface of the resin film is carried by the resin film to a portion on which the resin film is bonded by the travel of the resin film. Air so carried remains as bubbles between the steel strip and the resin film and when the bubbles are large, they result in so-called "swell".

This "swell" obviously lowers the commercial value of the laminate steel strip. Even though the swell consists of bubbles so small that they are not visible, adhesion of the film deferiorates remarkably after the film is subjected to severe processing such as drawing and ironing, for example, and the material is not therefore useful.

To prevent such entrappment of bubbles, Japanese Unexamined Patent Publication (Kokai) No. 63-233824 describes a method which feeds a resin film towards a steel strip while the angle between them is kept at 30 to 90° and bonds them by press rolls. It is believed that this method is directed to prevent the wedge effect of the air stream, but when high speed lamination is carried out at a running speed of the steel strip of at least 200 m/min, entrappment of air nonetheless occurs. Accordingly, this method is not yet sufficient.

As a more fundamental solution, it would be easily conceivable to employ a method which eliminates air or an atmospheric gas at the bonding portion and carries out the operation in a vacuum. For example, Japanese Unexamined Patent Publication (Kokai) No. 63-118241 describes a method which disposes a vacuum chamber on the upstream side of the press rolls and reduces the internal pressure of this chamber to 100 to 200 Torrs by a vacuum pump. The entry side of this vacuum chamber is sealed by a seal roll and its outlet side, by the press rolls and a seal roll. A metallic foil and a film are laminated inside the vacuum chamber and a laminate sheet free from entrappment of bubbles can be obtained. When this method is applied to lamination of a resin film to a steel strip or an aluminum sheet, entrapment of bubbles also occurs, when the running speed of the steel strip exceeds 200 m/min.

This phenomenon may be interpreted in the following way. Surface coarseness is artificially imparted to ordinary steel strips or aluminum sheets. This surface coarseness has no effect at a low running speed of the steel strip, but when the running speed becomes high, air existing in the recesses is not sufficiently diffused even at reduced pressure and is as such entrapped during bonding.

When severe processing such as drawing or ironing is carried out, such bubbles result in film defects and become the starting point of corrosion.

Vacuum deposition techniques of aluminum onto a film or of zinc onto a steel strip have been widely known in the field of vacuum deposition, but because a high vacuum of lower than 1 Torr is necessary, differential vacuum chambers must be disposed in multiples stages at the front and back or an entire apparatus including a strip of the processed material must be evacuated batch-wise. When such a method is applied to lamination of the resin film to the steel strip, entrapment of air can be sufficiently prevented even at a high speed but in view of the fact that the object of high speed lamination lies in the reduction of the operation cost, this method is incompatible with this object because the cost of the apparatus becomes high. In practical operation, catching of foreign matter adhering to the steel strip at the bond portion often occurs. To solve this problem, the high vacuum must be returned to the normal pressure because there is no means for managing the press rolls inside the high vacuum chamber from outside, and the efficiency of the high speed lamination apparatus is remarkably lowered.

Rolling traces occur on the surface of the press rolls when the weld portion between the steel strips or the joint portion of the aluminum strips passes through the press rolls, and these rolling traces of the press rolls lead to appearance defects on the laminate surface in subsequent lamination. Accordingly, the press rolls must be spaced apart from the steel strip or the aluminum strip when the joint portion (weld portion) passes through the press rolls, but when the press rolls exist inside a high vacuum chamber, a mechanical clearance is unavoidable at the vacuum seal portion if a moving mechanism of the press rolls is disposed, so that a high vacuum cannot be maintained.

Another problem is as follows. In the case of an air-to-air system, the film is clamped by seal rolls in multiple stages when it is introduced from the atmosphere into the vacuum chamber and for this reason, an excessive tension is likely imparted to the film. Further, because the film is softened or is partly molten at the bond portion, the film cannot withstand this excessive tension and is broken.

It is therefore an object of the present invention to provide an economical lamination method which can restrict the volume of a gas entrapped at the time of high speed lamination and a laminate metal strip or cans formed by the metal strip.

This object has been achieved by an entirely novel concept in which lamination treatment of a resin film is carried out in an atmosphere containing a gas which has a higher transmission rate in the resin film than air in order to prevent air entrappment during the high speed lamination of the resin film to the surface of the steel strip without employing lamination treatment at a reduced pressure such as inside the vacuum chamber.

The present invention is based on the premise that the gas inside an atmosphere sealing box where the lamination treatment is carried out is entrapped between the resin film and the steel strip and moreover, if the volume ratio of the above gas to the total volume of an atmospheric gas in the atmosphere sealing box is at least 80%, after the gas entrapped between the resin film and the steel strip is dissipated to the atmosphere, a bubble area ratio of the remaining gas becomes very small, so as to avoid breakage of the film which occurs by producing articles. Namely, seal management of the atmosphere sealing box is extremely easy and moreover when a gas having a ratio of its gas transmission coefficient to that of air of at least 2 is used, the gas entrapped between the resin film and the steel strip can be easily dissipated to the atmosphere through the resin film, whatever kind of resin film is used. Moreover, the laminate metal strip so produced has a bubble area ratio of the entrapped gas of not greater than 1% which does not render any problem for the post-processing steps.

To laminate the resin film to the metal strip, the present invention first heats the metal strip to a temperature approximately equal to the melting point of the resin film (melting point ± 20°C), then superposes the resin film on at least one of the surfaces of the metal strip, feeds the metal strip with the resin film into press rolls disposed inside an atmosphere sealing box, and simultaneously bonds them together to form a laminate metal strip. A gas having its transmission coefficient ratio to that of air of at least 2 is sealed into the atmosphere sealing box so that the volume ratio of said gas to the total volume of the atmospheric gas (containing the gas and air) in the atmosphere sealing box is at least 80%.

When the lamination treatment is thus carried out, the atmospheric gas is sealed between the resin film and the metal strip. However, because the gas has a higher transmission rate through the resin film than air, it is dissipated to the atmosphere through the resin film during the process in which the laminate metal strip is cooled down to room temperature or during the re-pressuring process or with the passage of time after the production of the laminate metal strip. As a result, when processing such as can manufacturing is conducted by using the laminate metal strip according to the present invention, breakage of the film due to the remaining bubbles, as has been observed in the past, can be avoided, and an excellent laminate formed article can be obtained.

According to the present invention, even when the formation rate of the laminate metal strip is a high rate of 200 m/min or more, the bubble area ratio of the gas sealed into the laminate metal strip is not greater than 1.0%, and this value does not at all render any problem to secondary processing such as can manufacturing.

To obtain such a bubble area ratio at an extremely high formation rate of the laminate metal strip, re-pressuring may be carried out between the outlet of the atmosphere sealing box and a cooling zone for the laminate metal strip within a range of 4.9 to 98 MPa and in such a manner as to satisfy the following relation in accordance with the formation rate (running speed) of the laminate metal strip:

$$\text{(surface pressure/0.098)} - 10 \geq \text{(formation rate of laminate metal strip)}^2/1{,}000$$

Accordingly, the gas having a transmission ratio to air of at least 2 remains in the laminate metal strip or the can so produced, within the range of the bubble area ratio of not greater than 1.0%.

Fig. 1 is a schematic side view showing an example of an atmospheric sealing apparatus to which a laminate metal strip formation method of the present invention is applied; and

Fig. 2 is a schematic, partially sectional view showing an example of a re-rolling apparatus for executing the laminate metal strip formation method according to the present invention.

First, the gas used in the present invention will be explained.

The inventors of the present invention have examined the ratios of transmission coefficients of various gases to air, which gases are sealed as bubbles when the resin film is laminated to the metal strip on the basis of the technical concept described above, in various polymers, and have confirmed that when a PVC is used, oxygen gas has its transmission coefficient ratio to that of air (hereinafter referred to as the "coefficient ratio") of 2.0 and that the object of the present invention can be accomplished at this value of the coefficient ratio. In other words, when a gas having a coefficient ratio of at least 2.0 is used, the gas transmits through almost all kinds of polymers and can be dissipated to the atmosphere.

It has been confirmed also that in order to more efficiently dissipate the sealed gas, the coefficient ratio in the PVC is at least 10.0. Therefore, the preferred coefficient ratio is at least 10.0, and a gas which has such a coefficient ratio (at least 10.0) and which has been most widely used industrially is carbon dioxide gas. Besides carbon dioxide gas, other gases industrially used and having a coefficient ratio of at least 10.0 are helium gas, hydrogen gas and water vapor.

Therefore, gases advantageously used in the present invention are oxygen gas, carbon dioxide gas, helium gas, hydrogen gas or water vapor, or a mixed gas of at least two of these gases.

Examples of organic vapors which are likely to permeate through resins are cyclohexane, benzene, toluene and carbon tetrachloride. However, they cannot be used easily for foodstuffs due to their flavor, or for building materials due to their offensive odor, and their application is remarkably limited.

When the laminate metal strip is laminated in the gas described above, a box-shaped seal box is preferably used so that the gas flowing into an inner box is sucked by an outer box so as to improve sealability of the atmospheric gas.

When the laminate metal strip is formed as described above, the concentration of the gas sealed into the bubbles is not particularly limited, but it is sufficient that the concentration, i.e., a volume ratio, of the above gas to the total volume of the atmospheric gas in the atmosphere sealing box is at least 80%. An expensive sealing apparatus is not necessary at such a volume ratio, and the cost of the setup is advantageously reduced.

The gas temperature is from room temperature to about 200°C so as to add the volume shrinkage effect at the time of cooling, but no particular problem occurs at room temperature. The gas pressure of the atmosphere in which the lamination treatment is carried out may be an ordinary atmospheric pressure.

The metal strips used for the present invention include steel strips such as a plated blank sheet, a tin plated steel sheet, a nickel plated steel sheet, electro-chromate treated steel sheet (tin-free steel sheet), a zinc plated steel sheet, an alloy zinc plated steel sheet, a lead-tin plated steel sheet, an aluminum plated steel sheet and alloy plated steel sheets of these metals, and an aluminum strip (for example, No. 3,000 type, No. 5,000 type alloy).

Examples of the heat-bondable resin films include polyester resins (polyethylene terephthalate, polybutylene terephthalate or their isophthalate copolymers), acid modified polyolefin resins (polyethylene or polypropylene or acid modified products of their copolymers), polyamide resins (nylon, etc.), polyvinyl alcohol, polyacrylonitrile, polystyrene, and so forth.

The temperature of the steel sheet or the aluminum sheet at the time of heat-bonding is apploximately equal to the melting point (melting point ± 20°C) of the resin film to be laminated, and the heat-bonding method of the resin film may be a normal method which imparts the heat retained by the steel strip or the aluminum strip to the resin film.

A so-called "dry lamination", which executes lamination through an adhesive, is also embraced within the range of the present invention.

Next, the production method of the laminate metal strip according to the present invention will be explained more concretely.

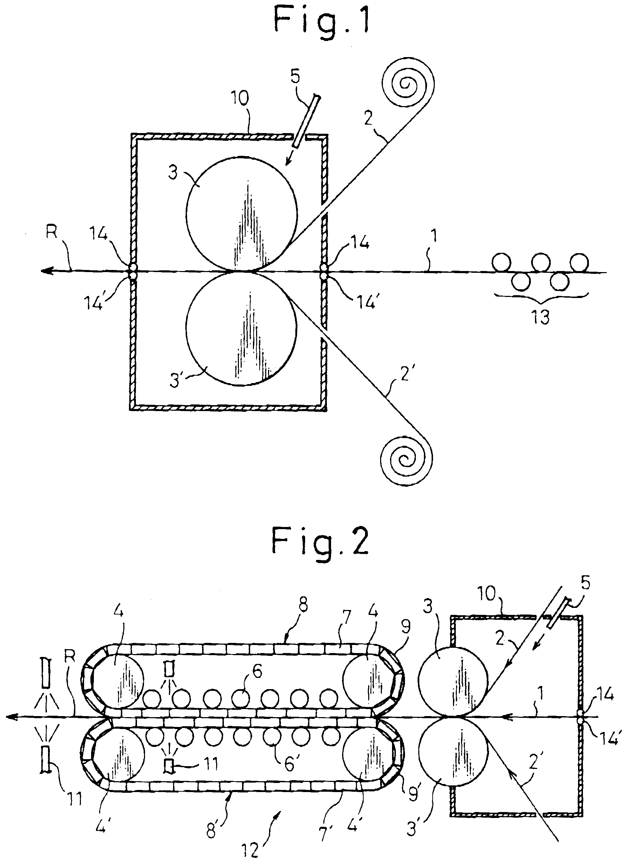

As shown in Fig. 1, the resin films 2, 2' described above are bonded to both surfaces of the metal strip 1 which is heated to a temperature somewhat lower than the melting point of the resin films 2, 2'. Presses 3, 3' are disposed inside an atmosphere sealing box 10. Reference numeral 13 denotes a steel strip heater and reference numeral 14 denotes an atmosphere sealing roll. An atmospheric gas such as a carbon deoxide gas is sealed into the sealing box through a gas seal pipe 5.

When the formation rate of the laminate metal strip is greater than 200 m/min, the atmospheric gas is generally likely to be entrapped between the metal strip and the resin film. Therefore, when the formation rate of the metal strip reaches a high rate of at least 200 m/min, a gas having the coefficient ratio of at least 2 as stipulated in the present invention is used as the atmospheric gas inside the atmosphere sealing box 10. However, for example, when the surface coarseness of the metal strip is great the atmospheric gas is easily entrapped even at a low formation rate of below 200 m/min. In such a case, the atmospheric gas according to the present invention is used.

Further, the present process can be applied to the steps of forming the laminate metal strip at a formation rate of 100 m/min.

The metal strip so laminated is cooled from the lamination temperature to room temperature, and the cooling means in this case is not particularly limited. It is therefore advisable to select and use a suitable cooling means such as cooling with water, roll cooling, cooling with a gas, etc., in accordance with the application.

When it is necessary to obtain a very low bubble area ratio of the laminate metal strip, a re-pressuring device is disposed between the outlet of the atmosphere sealing box and the cooling zone so as to carry out re-pressuring within a range of 4.9 to 98 MPa and at a surface pressure satisfying the formula given below, in accordance with the travelling speed of the laminate metal strip:

$$(\text{surface pressure}/0.098) - 10 \geqq (\text{formation ratio of laminate metal strip})^2/1{,}000$$

4

When the press force exceeds 98 MPa, a decrease of the thickness of the resin film occurs.

Fig. 2 shows an example of such a re-pressuring apparatus.

Fig. 2 shows the outline of a trackless rolling apparatus. The sealing box 10 for controlling the atmosphere when the metal belt 1 and the resin films 2, 2' are bonded is disposed on the entry side of the press rolls 3, 3', and pairs of front and rear support rolls are disposed on the outlet side of the press rolls in such a manner as to come into contact with the resin films 2, 2', respectively. Endless strips 8, 8' made of a plurality of heat-resistant steel blocks 7, 7' are wound round these support rolls 4, 4 and 4', 4'. Heat-resistant rubber strips 9, 9' made of a silicone rubber, for example, are disposed outside the endless strips 8, 8', and a plurality of press rolls 6, 6' are disposed on the back of the endless strips 8, 8' so as to press the metal sheet 1 and the resin films 2, 2'. These members together constitute the re-pressuring apparatus 12 described above.

A cooling zone comprising cooling nozzles 11 is disposed on the outlet side of the re-pressuring apparatus so that the laminate metal strip R can be cooled at the post re-pressuring stage and after completion of re-pressuring. Further, re-pressuring may be carried out within the temperature range of from the lamination temperature to the softening point of the resin film by disposing a temperature controller (for heating or cooling) on the entry side of the re-pressuring device, too.

The re-pressuring apparatus is not particularly limited to the construction described above. For example, a plurality of press rolling devices may be disposed on the outlet side of the press rolls.

The present invention aims at reducing the bubble area ratio to not greater than 1.0% as a target value and the reason is based on the finding obtained by the experiments described below.

The experiments were carried out by using an electro-chromate treated steel sheet as the metal strip, heating the steel sheet to 260°C and laminating PET (polyethylene terephthalate) as the resin films to the surfaces of the steel sheet by using the apparatus shown in Fig. 1. The atmosphere of the laminate bonding portion was the carbon deoxide gas. The metal strip was shaped by changing the formation rate of the laminate metal strip so as to change the bubble area ratio. The bubble area ratio was affected by the melt-thickness of the laminate film. In order to obtain a constant melt-thickness, therefore, each of the resulting laminate metal strips was retained at 260°C for one minute and then the bubble area ratio was measured.

Next, each of the metal strips was rolled at a predetermined reduction ratio (%) to examine the soundness of the film, and the relationship between the bubble area ratio and processability was tabulated in Table 1.

The soundness of the film was evaluated by the value obtained by measuring a current value (ERV: enamel rater value) when a 6 V voltage was applied between the steel strip (sample) after rolling and an electrode through 0.5% brine. Sound films had an ERV value of 0.

It can be understood from the results tabulated in Table 1 that the ERV value was 0 when the bubble area ratio was not greater than 1%, and the soundness of the film after rolling was excellent. Accordingly, the present invention contemplates to reduce the bubble area ratio to not greater than 1%.

Table 1

| Bubble area ratio % | Enamel rater value of laminate steel sheet after rolling (mA) | | | |
|---|---|---|---|---|
| | reduction ratio at rolling | | | |
| | 0% | 20% | 40% | 80% |
| 0.00 | 0.00 | 0.00 | 0.00 | 0.00 |
| 0.5 | 0.00 | 0.00 | 0.00 | 0.00 |
| 1.0 | 0.00 | 0.00 | 0.00 | 0.01 |
| 5 | 0.00 | 1.5 | 8 | 18 |
| 12 | 0.00 | 2.1 | 20 | 61 |

## EXAMPLES

PET films as the resin films 2, 2' were laminated to electro-chromate treated steel sheet as the metal strip, which was heated to 260°C, inside the atmosphere sealing box 10 in the apparatus shown in Fig. 2, and the resulting laminate metal strip R was then re-pressured by the re-pressuring apparatus and was thereafter cooled in the cooling zone 11.

As the gas to be sealed into the atmosphere sealing box 10 through the gas sealing pipe 5, nine kinds of gases were used, and are tabulated in Table 2, and the laminate metal strip formation rate as well as the re-pressuring pressure were changed as tabulated in Table 2.

The bubble area ratio of each of the laminate metal strip obtained in this way was measured under the same conditions as in the measurement shown in Table 1.

As tabulated in Table 2, the samples Nos. 1 to 9 according to the examples of this invention provided a bubble area ratio which did not cause any problem during re-rolling of the metal strip, that is, a value not greater than 1.0%, irrespective of the high formation rate of 200 m/min.

In the case of the sample No. 1, a bubble area ratio of 0.5% could be obtained without re-rolling even at a high formation rate of 500 m/min when carbon dioxide gas was used as the atmospheric gas.

Because the formation rate of the sample No. 1 was higher by 2.5 times than that of the sample No. 2, its bubble area ratio was as high as 0.5% in comparison with the bubble area ratio of the sample No. 2 of 0.1%. However, when a re-pressuring pressure of 25.48 MPa was applied to the sample No. 1 (corresponding to the sample No. 3), the bubble area ratio could be decreased to 0.1%.

When gases having a high coefficient ratio were used, as in the case of the samples Nos. 7 to 9, extremely low bubble area ratios could be obtained without re-pressuring even at a high formation rate of 500 m/min.

On the other hand, for samples Nos. 11 to 13, bubble area ratios of not greater than 0.1 could be obtained without re-pressuring even at a high formation rate of 500 m/min because in the sealing box, the gas having a high coefficient ratio was used. Nonetheless, because the atmospheric gases were all organic vapors, the applications of the resulting laminate metal strips are limited. When air was used as the atmosphere gas in the sealing box, the bubble area ratio was 2% even at a low formation rate of 100 m/min or even when a re-pressuring pressure of 9.8 MPa was applied at a formation rate of 200 m/min, and defects occurred in the laminate film when the laminate metal strip was rolled.

## Table 2

| No. | Kind of gas in sealing box and transmission coefficient ratio to air (vs PET) | Volume ratio of gas in atmosphere sealing box to total volume of atmospheric gas in this box (%) | Laminate metal strip formation rate (m/min) | Bubble area ratio after heat-treatment at 260°C, 1 min.(%) | Re-pressuring pressure (MPa) |
|---|---|---|---|---|---|
| 1 | CO₂ gas, 14 times | 97 | 500 | 0.5 | nil |
| 2 | - ditto - | 98 | 200 | 0.1 | " |
| 3 | - ditto - | 98 | 800 | 0.1 | 88.2 |
| 4 | - ditto - | 99 | 500 | 0.1 | 260 |
| 5 | - ditto - | 85 | 300 | 0.1 or below | 100 |
| 6 | - ditto - | 97 | 200 | - ditto - | 50 |
| 7 | He gas, 63 times | 98 | 500 | - ditto - | nil |
| 8 | H gas, 140 times | 97 | 500 | - ditto - | " |
| 9 | water vapor, 4,900 times | 99 | 500 | - ditto - | " |
| 10 | O₂ gas, 4 times | 82 | 500 | 0.9 | " |
| 11 | benzene, 100 times | 99 | 500 | 0.1 or below | nil |
| 12 | carbon tetrachloride, 180 times | 98 | 500 | - ditto - | " |
| 13 | hexane, 180 times | 98 | 500 | - ditto - | " |
| 14 | air, approx. 1 time | - | 500 | 10 | " |
| 15 | - ditto - | - | 200 | 5 | " |
| 16 | - ditto - | - | 100 | 2 | " |
| 17 | - ditto - | - | 500 | 5 | 29.4 |
| 18 | - ditto - | - | 200 | 2 | 9.8 |
| 19 | O₂ gas, 4 times | 40 | 500 | 4 | nil |

Though roll processing is demonstrated as an example of post stage processing, the laminate metal band according to the present invention is suitable for severe processing which is ordinarily carried out, such as press-contraction and drawing.

Though Tables 1 and 2 represent the case where polyethylene terephthalate (having a melting point of 265°C) was bonded at a bonding temperature of 260°C, the same results as those of Tables 1 and 2 were obtained when polybutyelene terephthalate (melting point of 230°C), nylon 6 (melting point of 215°C), acid-modified polypropylene (melting point of 188°C), acid-modified low density polyethylene (melting point of 120°C), polyacrylonitrile (melting point of 317°C), polyvinyl chloride (melting point of 210°C) and isotactic polystyrene (melting point of 230°C) were laminated at the bonding temperatures corresponding to the respective melting points. Further, though an electro-chromate treated steel sheet having a sheet width of 500 mm was used as the blank in Tables 1 and 2, the same results as those of Tables 1 and 2 were obtained by using a tin plated steel strip (a resin having a melting point not higher than that of tin was used in the case of tin plated sheet), a plated blank sheet, a nickel plated steel strip, a zinc plated steel strip, an alloy zinc plated steel strip, a lead-tin plated steel strip, an aluminum plated steel strip, a zinc-iron alloy plated steel strip, a zinc-nickel alloy steel strip or an aluminum strip.

When a plurality of press roll devices were used as the re-pressuring apparatus, the same results as those of Tables 1 and 2 were obtained by conducting cooling immediately after bonding.

It has been thus confirmed that when a gas having high transmissivity to the laminate film is entrapped as bubbles, the inner pressure of the bubbles decreases during the laminate process or while the laminate strip are left standing in the atmosphere and the bubbles become harmless when the laminate sheet is processed. The volume of the entrapped gas increases with the increase of the laminate metal strip formation rate, but the volume of the bubbles can be reduced to a harmless level by increasing the rolling force in accordance with this increase of the formation rate and furthermore, the inner pressure of the bubbles decreases during the laminate process or while the bubbles are left standing at atmospheric pressure. Accordingly, no problem occurs at all during processing. As a result, an excellent laminate article can be obtained.

As described above in detail, the resin laminate method according to the present invention can prevent environmental contamination resulting from the solvents used during the coating and baking processes and can eliminate the consumption of energy for evaporating the solvents.

Particularly, the high speed lamination method according to the present invention can economically and stably mass-produce the laminate material, and at the same time, because the line speed of a plating line such as a tin plating line or a tin-free plating line (chromium plating line) can be brought into conformity with the laminate metal strip formation rate, the product can be produced more economically.

In the laminate metal strip produced by the method of the present invention, the gas which is entrapped as the bubbles can be made harmless at the time of processing. For this reason, an excellent laminate shaped article can be obtained, and the production yield of acceptable products can be improved. The method of the present invention has a diversified field of application because it can be applied to the fields of can production, home electronics, building materials, and so forth.

## Claims

1. A method of laminating a resin film to a metal strip, comprising the steps of:

   heating said metal strip to a temperature approximately equal to the melting point (melting point ± 20°C) of said resin film;

   disposing press rolls for bonding said resin film to said metal strip inside an atmosphere sealing box, and sealing a gas having a transmission coefficient ratio to air of at least 2 into said atmosphere sealing box so that the volume ratio of said gas to a total volume of an atmospheric gas in the atmospere sealing box is at least 80%;

   feeding said resin film with said metal strip into said atmosphere sealing box in such a manner that said resin film is superposed with at least one of the surfaces of said metal strip, and simultaneously bonding said resin film and said metal strip by said press rolls to form a laminate metal strip; and

   cooling said laminate metal strip to room temperature.

2. The method of claim 1, wherein a gas having a ratio of a gas transmission coefficient of at Least 10 to air is used as said gas inside said atmosphere sealing box.

3. The method of claim 1 or 2, wherein the formation rate of said laminate metal strip is at least 100 m/min.

4. The method of any of claims 1 to 3, wherein said gas sealed into said atmosphere sealing box is at least one kind of gas selected from carbon dioxide gas, helium gas, hydrogen gas and a water vapor.

5. The method of any of claims 1 to 4, wherein the formation rate of said laminate metal strip is at least 200 m/min, and the bubble area ratio of said laminate metal strip obtained thereby is not greater than 1.0%.

6. The method of any of claims 1 to 5, wherein said laminate metal strip is rolled between an outlet of said atmosphere sealing box and a cooling zone.

7. The method of claim 6, wherein the surface pressure applied between said metal strip and said resin film between the outlet of said sealing box and said cooling zone is selected in accordance with the running speed of said laminate metal strip within the range of 4.9 to 98 MPa and so as to satisfy the following relation:

$$\text{(surface pressure/0.098) - 10} \geqq \text{(laminate metal strip formation rate)}^2/1{,}000$$

8. A laminate metal strip obtainable by laminating a resin film to a metal strip characterized in that a gas having a transmission coefficient ratio to air of at least 2 remains between said resin film and said metal strip or inside said resin film.

9. A laminate metal strip of claim 8, wherein said gas having a bubble area ratio of not greater than 1.0% remains in said laminate metal strip formed at a formation rate of at least 200 m/min.

10. A laminate metal strip of claim 8 or 9, wherein said gas is at least one kind of gas selected from carbon dioxide gas, helium gas, hydrogen gas, oxygen gas and a water vapor.

11. A laminate can obtainable by a laminate metal strip which is formed at a formation rate of at least 200 m/min and in which a gas having a transmission coefficient ratio to air of at least 2 remains within the range of a bubble surface area of not greater than 1.0%.

# Fig.1

# Fig.2